# EUROPÄISCHE PATENTSCHRIFT

(11) **EP 2 398 132 B1**
(45) Veröffentlichungstag und Bekanntmachung des Hinweises auf die Patenterteilung: **20.02.2019**
(21) Anmeldenummer: 10006319.7
(22) Anmeldetag: 18.06.2010
(51) Int. Cl.: H02K 9/20, H02K 5/22, H02K 5/20, H02K 5/18, H02K 11/33, F28D 15/04

(54) **Pumpenaggregat**
Pump power unit
Groupe motopompe

(43) Veröffentlichungstag der Anmeldung: 21.12.2011
(73) Patentinhaber: Grundfos Management A/S, 8850 Bjerringbro (DK)
(72) Erfinder: Andersen, Lars Kannegaard, 8920 Randers NV (DK); Olesen, René H., 8381 Tilst (DK); Sørensen, Rasmus, 8900 Randers C (DK)
(74) Vertreter: Hemmer, Arnd

(56) Entgegenhaltungen:
- EP-A1- 1 717 536
- DE-A1-102004 046 821
- FR-A1- 2 895 589
- JP-A- S6 115 542
- US-A1- 2005 241 807
- US-A1- 2008 017 354
- US-A1- 2008 266 803
- US-A1- 2010 126 703

## Beschreibung

Die Erfindung betrifft ein Pumpenaggregat mit einem elektrischen Motor.

Es ist bekannt, die bei Betrieb eines elektrischen Motors entstehende Wärme an der Außenseite des Motorgehäuses aus dem Motor abzuführen. Hierzu werden in den Gehäusen elektrischer Motoren bislang z.B. Festkörperwärmeleiter verwendet.

US 2010/0126703 A1 offenbart, die im Statorgehäuse eines elektrischen Motors entstehende Wärme, das heißt die durch den elektrischen Motor selber entstehende Abwärme, mittels in dem Statorgehäuse angeordneter Heatpipes abzuführen. Der grundsätzliche Aufbau einer Heatpipe ist beispielsweise aus US 2005/0241807 A1 bekannt. Diese Heatpipe weist ein Rohr mit einem darin angeordneten Docht und einem Kühlmittel auf. US 2008/0266803 A1 offenbart einen elektrischen Leistungsbus, der mit einem auf der Grundlage eines Phasenübergangs arbeitenden Wärmespreitzer ausgestattet ist. EP 1 717 536 A1 offenbart eine Heatpipe, welche in eine wärmeableitende Struktur eines Gleichrichters integriert ist.

Aus US 2008/0017354 A1 ist ebenfalls die Anordnung einer Heatpipe in einem Elektromotor zur Abfuhr der im Elektromotor erzeugten Abwärme bekannt. Auch JP S6115542 A und FR 2 895 589 A1 offenbaren Anordnungen von Kühlleitungen zur Abfuhr der Abwärme eines Elektromotors.

Ferner ist es bei modernden Elektromotoren und insbesondere bei Pumpenaggregaten bekannt, Frequenzumrichter zur Drehzahlsteuerung der Elektromotoren einzusetzen. Derartige Frequenzumrichter weisen eine Leistungselektronik auf, welche ebenfalls Abwärme erzeugt. Diese Leistungselektronik wird üblicherweise in separaten Elektronikgehäusen oder in Abschnitten des Motorgehäuses angeordnet und über separate Kühlkörper gekühlt.

Es ist Aufgabe der Erfindung, ein Pumpenaggregat mit einem elektrischen Motor mit einer Leistungselektronik dahingehend zu verbessern, dass die Leistungselektronik bei kompaktem Aufbau des Elektromotors besser gekühlt werden kann.

Gelöst wird diese Aufgabe durch ein Pumpenaggregat mit einem elektrischen Motor mit den in Anspruch 1 angegebenen Merkmalen. Vorteilhafte Weiterbildungen dieses Motors ergeben sich aus den Unteransprüchen, der nachfolgenden Beschreibung sowie den Zeichnungen. Hierbei können gemäß der Erfindung die in den Unteransprüchen und der Beschreibung angegebenen Merkmale jeweils für sich aber auch in geeigneter Kombination die erfindungsgemäße Lösung gemäß Anspruch 1 weiter ausgestalten.

Der erfindungsgemäße elektrische Motor weist mindestens ein Gehäuse auf. In diesem Gehäuse sind in üblicher Weise Funktionselemente des Motors, vorzugsweise im Wesentlichen alle Funktionselemente des Motors angeordnet. Gemäß der Erfindung ist in das Gehäuse des elektrischen Motors darüber hinaus zumindest eine Heatpipe bzw. ein Wärmerohr zur Wärmeabfuhr integriert.

Bei einer Heatpipe handelt es sich um einen Wärmeübertrager mit einem geschlossenen, vorzugsweise länglichen Hohlkörper, der teilweise mit einer Flüssigkeit gefüllt ist. Bei einem Wärmeeintrag in die Heatpipe wird die Flüssigkeit im Bereich des Wärmeeintrags verdampft, wobei sie in einem von dem Bereich des Wärmeeintrags beabstandeten Abschnitt der Heatpipe kondensiert und dort die zuvor aufgenommene Wärme wieder abgibt.

Eine solche Heatpipe bzw. Heatpipes ersetzen in dem erfindungsgemäßen elektrischen Motor die bislang üblichen Wärmeleiter zum Abführen der Wärme aus dem Inneren des Motorgehäuses. Dabei erweist es sich als vorteilhaft, dass die Wärmestromdichte beim Abführen von Wärme bei einer Heatpipe gegenüber den bislang verwendeten Wärmeleitern größer ist.

Insofern können die eingesetzten Heatpipes gegenüber den bislang verwendeten Wärmeleitern bei Abfuhr der gleichen Wärmemenge kompakter ausgebildet sein, so dass der gesamte elektrische Motor gegenüber den bislang bekannten Motoren gleicher Leistung deutlich geringere Abmessungen aufweisen kann. Ferner kann die Wärme über längere Wege abgeführt werden, wodurch sich größere Freiheiten bei der Anordnung der Wärme erzeugenden Bauteile ergeben. Auch kann die Wärme leichter über größere Gehäusebereiche verteilt abgeführt werden.

Alternativ ist es typischerweise auch möglich, Heatpipes einzusetzen, deren Abmessungen im Wesentlichen denjenigen der bislang eingesetzten Wärmeleiter entsprechen, so dass im Vergleich zu bislang bekannten Motoren bei gleicher Motorbaugröße elektrische Motoren größerer Leistung realisierbar sind.

Im Hinblick auf die in elektrischen Motoren eingesetzte Leistungselektronik, die in der Regel eine bedeutende Wärmequelle im Inneren des Motorgehäuses bilden, ermöglichen es Heatpipes aufgrund ihrer sehr guten Wärmeabführeigenschaften weiter vorteilhaft, preisgünstigere Leistungselektronikkomponenten einzusetzen, die zwar mehr Abwärme erzeugen, was aber insofern akzeptabel ist, als diese größere Wärmemenge von einer Heatpipe unproblematisch abgeführt werden kann.

Das Gehäuse, in dem die Heatpipe angeordnet ist, ist ein Statorgehäuse des Motors. Dementsprechend ist die Heatpipe in einem Gehäuse angeordnet, das den die Spule oder Spulen tragenden feststehenden Teil des Elektromotors einkapselt. In dem Statorgehäuse kann die Heatpipe vorteilhaft in einem den Stator außenseitig umgebenden Bereich angeordnet sein. Dieser Bereich kann sich sowohl stirnseitig als auch umfangsseitig an den Stator anschließen.

Der erfindungsgemäße elektrische Motor ist Teil eines Pumpenaggregats. Pumpenaggregate bestehen üblicherweise aus einem elektrischen Motor und einer von diesem Motor angetriebenen Pumpe und weisen neben dem Statorgehäuse auch ein Pumpengehäuse auf, das sich an dem Ende des Statorgehäuses anschließt, an dem der Rotor bzw. die Antriebswelle des Motors aus dem Statorgehäuse herausgeführt ist. Vorteilhaft kann das Gehäuse, in dem die Heatpipe integriert ist, auch dieses Pumpengehäuse sein. Daneben ist es auch denkbar die Heatpipe derart anzuordnen, dass sie sich von dem Statorgehäuse in das direkt daran angrenzende Pumpengehäuse erstreckt, oder es besteht die Möglichkeit, sowohl in dem Statorgehäuse als auch in dem Pumpengehäuse jeweils mindestens eine Heatpipe anzuordnen. Elektrische Motoren können an der Außenseite ihres Gehäuses einen Klemmenkasten aufweisen, der üblicherweise eine Verbindung des Motors mit einer Stromversorgung herstellt und häufig zumindest einen Teil der Leistungs- und Steuerungselektronik sowie die Bedienelemente des Motors beinhaltet. Bei Pumpenaggregaten kann ein Klemmenkasten ggf. auch außenseitig des Pumpengehäuses angeordnet sein. Im Sinne der Erfindung bildet ein solcher zusätzlicher Klemmenkasten einen Teil des Motorgehäuses, in dem die zumindest eine Heatpipe integriert ist.

Erfindungsgemäß ist die Heatpipe in eine Wandung des Gehäuses, d.h. des Statorgehäuses und des Klemmenkastens und vorzugsweise des Pumpengehäuses integriert.

Ein Wärme erzeugendes Bauteil, welches eine Komponente einer Leistungselektronik ist, ist an einer Außenseite der Heatpipe im Bereich eines Verdampferendes angeordnet.

Das Gehäuse des elektrischen Motors bildet einen Teil der zumindest einen Heatpipe. In diesem Zusammenhang ist vorzugsweise vorgesehen, dass ein Abschnitt des Gehäuses einen hermetisch verschließbaren, mit der Arbeitsflüssigkeit zu befüllenden Hohlraum der Heatpipe bildet bzw. aufweist.

Hierzu ist in einer Wandung des Gehäuses eine Ausnehmung ausgebildet sein, welche zumindest einen Teil der Heatpipe bildet. Demzufolge ist vorgesehen, eine Gehäusewandung des erfindungsgemäßen Motors zumindest in einem Abschnitt hohl auszubilden, wobei die den so gebildeten Hohlraum außen begrenzenden Wandungsabschnitte die äußere Hülle der Heatpipe bilden. Die Ausnehmung kann direkt in eine Wandung des Gehäuses eingearbeitet sein. Alternativ kann eine Gehäusewandung zumindest in einem Abschnitt doppelwandig ausgebildet sein, wobei ein Zwischenraum zwischen beabstandeten Wandungsabschnitten die Ausnehmung bildet.

Zur Bildung einer Heatpipe ist in der Ausnehmung zumindest ein Arbeitsfluid der Heatpipe aufgenommen. Ist die Anordnung der Heatpipe derart, dass das kondensierte Arbeitsfluid nicht schwerkraftbedingt zu dem Verdampferbereich der Heatpipe zurückfließen kann, kann in der Ausnehmung vorteilhaft neben dem Arbeitsfluid ein Docht aufgenommen sein. Der Docht dient in Heatpipes üblicherweise dazu, das Arbeitsfluid von dem Kondensatorbereich zu dem Verdampferbereich der Heatpipe zurückzutransportieren. Zu diesem Zweck ist der Docht vorzugsweise aus einem Kapillarmaterial ausgebildet, das einen Rücktransport des Arbeitsfluids aufgrund von Kapillarwirkung ermöglicht. Grundsätzlich können als Dochtmaterial und Arbeitsfluid alle in Heatpipes üblicherweise verwendeten Materialien und Fluide verwendet werden.

Vorzugsweise sind die Abmessung und Form des Dochtes so, dass in der Ausnehmung genügend Raum für das Arbeitsfluid verbleibt. Beispielsweise kann der Docht eine Außengeometrie aufweisen, die kleiner als die Innengeometrie der Ausnehmung ist oder in etwa der Innengeometrie der Ausnehmung entspricht, wobei innerhalb des Dochtes ein Hohlraum ausgebildet ist, der den Verdampferbereich der Heatpipe mit deren Kondensatorbereich verbindet.

Wie bereits angemerkt worden ist, weist eine Heatpipe einen mit einem Docht und einem Arbeitsfluid gefüllten Hohlraum auf, der gegenüber seiner Umgebung dicht verschlossen ist. Wenn eine an einer Wandung ausgebildete Ausnehmung diesen Hohlraum zur Aufnahme des Dochts und des Arbeitsfluids bildet, ist es typischerweise auch erforderlich, das Innenlumen dieser Ausnehmung dicht gegenüber dessen Außenumgebung zu verschließen. Hierzu kann vorteilhafter Weise ein Deckel vorgesehen sein, mit dem die Ausnehmung durch Abdeckung einer Öffnung der Ausnehmung hermetisch verschlossen wird.

Falls die Heatpipe in einer Ausnehmung einer Gehäusewandung des elektrischen Motors integriert ist, ist es zweckmäßig, wenn das zumindest eine Wärme erzeugende Bauteil an der Wandung des Gehäuses, d.h. vorzugsweise an der Innenseite der Gehäusewandung im Bereich der Ausnehmung anliegt. Auf diese Weise ist eine direkte Wärmebrücke von diesem Bauteil zu der Heatpipe gegeben, so dass die Abwärme dieses Bauteils auf kürzestem Weg aus dem Gehäuse des erfindungsgemäßen Motors abgeführt werden kann. Vorteilhaft ist hierbei die Kontur, insbesondere Innenkontur der Wandung in dem Bereich, in dem das Wärme erzeugende an der Wandung anliegt, an die Kontur des Wärme erzeugenden Bauteils angepasst, um so eine möglichst große Kontaktfläche zwischen dem Bauteil und der Wandung zu schaffen.

Besonders vorteilhaft kann mindestens ein zur Anlage des zumindest einen Wärme erzeugenden Bauteils vorgesehener Abschnitt an der Wandung des Gehäuses eben abgeflacht ausgebildet sein. An diesem abgeflachten Wandungsabschnitt berührt das Wärme abgebende Bauteil die Wandung zweckmäßigerweise ebenfalls mit einer Flachseite, so dass ein vergleichsweise großer Kontaktbereich zwischen dem Bauteil und der Wandung besteht, der die Abfuhr einer entsprechend großen Wärmemenge von dem Bauteil in die Heatpipe ermöglicht.

In einer weiteren vorteilhaften Ausgestaltung kann das zumindest eine Wärme erzeugende Bauteil in einem in dem Gehäuse angeordneten Innengehäuse angeordnet sein, wobei das Abwärme erzeugende Bauteil eine Wandung des Gehäuses durch in dem Innengehäuse ausgebildete Öffnungen direkt oder indirekt kontaktiert. Die Verwendung eines Innengehäuses ermöglicht es beispielsweise Baugruppen elektronischer Komponenten des Motors wie Leiterplatinen außerhalb des Motorgehäuses in dem Innengehäuse vorzumontieren und anschließend das vormontierte Innengehäuse in das Motorgehäuse einzusetzen. Ein Abwärme erzeugendes Bauteil wird hierbei in dem Innengehäuse zweckmäßigerweise direkt vor der an dem Innengehäuse ausgebildeten Öffnung angeordnet, so dass durch die Öffnung eine wärmeleitende Verbindung zwischen dem Wärme abgebenden Bauteil und der in der Gehäusewandung integrierten Heatpipe geschaffen werden kann, indem diese direkt miteinander in Kontakt kommen.

Um eine möglichst effektive Wärmeabgabe von dem Motorgehäuse an die Außenumgebung des Motors zu ermöglichen, ist es sinnvoll, die Außenoberfläche des Motorgehäuses möglichst groß zu gestalten. In diesem Zusammenhang kann vorteilhaft vorgesehen sein, an der Außenseite des Motorgehäuses Kühlrippen auszubilden. Hierbei erweist es sich als besonders zweckdienlich, die Kühlrippen zumindest in dem Bereich des Motorgehäuses vorzusehen, der an den Kondensatorbereich der Heatpipe angrenzt. Die Kühlrippen sind also an dem Motorgehäuse bevorzugt zumindest in einem Abschnitt ausgebildet, der an den Bereich der Heatpipe angrenzt, in dem die Heatpipe die zuvor von einem Wärme erzeugenden Bauteil aufgenommen Wärme abgibt.

Bevorzugt erstreckt sich die Heatpipe mit ihrer Längsachse parallel zur Drehachse des Motors. Demzufolge weist die Heatpipe vorzugsweise die gleiche Ausrichtung wie der Rotor bzw. eine damit gekoppelte Antriebswelle des erfindungsgemäßen Motors auf. Es sei allerdings darauf hingewiesen, dass die Ausrichtung der Heatpipe in dem Gehäuse grundsätzlich beliebig ist. So kann die Heatpipe insbesondere dann, wenn sie in einem Klemmkasten oder einem Pumpengehäuse angeordnet ist, auch quer oder schräg zur Drehachse des Motors ausgerichtet sein.

Die Erfindung betrifft ein Pumpenaggregat, das neben einer Pumpe auch einen elektrischen Motor mit den oben genannten Merkmalen als Antriebsmotor aufweist. Die Verwendung der Heatpipe in dem Motorgehäuse und/ggf. dem Pumpengehäuse ermöglicht es, dieses Pumpenaggregat im Vergleich zu bislang bekannten Pumpenaggregaten gleicher Leistung kompakter auszugestalten oder im Vergleich zu Pumpenaggregaten gleicher Größe leistungsstärker auszugestalten. Die Abwärme
elektronischer Bauteile wie z.B. Leistungsschalter lässt sich mittels der Heatpipe leichter auf größere Gehäusebereiche verteilen.

Nachfolgend ist die Erfindung anhand in den Zeichnungen dargestellter Ausführungsbeispiele näher erläutert. In den Zeichnungen zeigt:
- Fig. 1: schematisch, in einer perspektivischen Explorationsdarstellung ein erstes Statorgehäuse eines elektrischen Motors,
- Fig. 2: schematisch, in einer perspektivischen Explorationsdarstellung ein Statorgehäuse eines elektrischen Motors, gemäß einer zweiten Ausführungsform,
- Fig. 3: schematisch, in einer perspektivischen Explorationsdarstellung ein Statorgehäuse eines elektrischen Motors, gemäß einer dritten Ausführungsform,
- Fig. 4: das Statorgehäuse nach Fig. 3 in einem Längsschnitt,
- Fig. 5: schematisch, in einer perspektivischen Explorationsdarstellung ein Statorgehäuse eines elektrischen Motors, gemäß einer vierten Ausführungsform,
- Fig. 6: schematisch, in einer perspektivischen Explorationsdarstellung ein Statorgehäuse eines elektrischen Motors, gemäß einer fünften Ausführungsform,
- Fig. 7: schematisch, in einer perspektivischen Darstellung ein Statorgehäuse eines elektrischen Motors, gemäß einer sechsten Ausführungsform,
- Fig. 8: das Statorgehäuse nach Fig. 7 in einer Explosionsdarstellung,
- Fig. 9: das Statorgehäuse nach Fig. 7 in einem Längsschnitt,
- Fig. 10: schematisch, in einer perspektivischen Explorationsdarstellung ein Statorgehäuse eines elektrischen Motors, gemäß einer siebten Ausführungsform,
- Fig. 11: das Statorgehäuse nach Fig. 10 im montierten Zustand,
- Fig. 12: in Draufsicht einer perspektivischen Explorationsdarstellung ein Innengehäuse zur Anordnung in einem Statorgehäuse und
- Fig. 13: das Innengehäuse nach Fig. 10 in einer Untersicht.

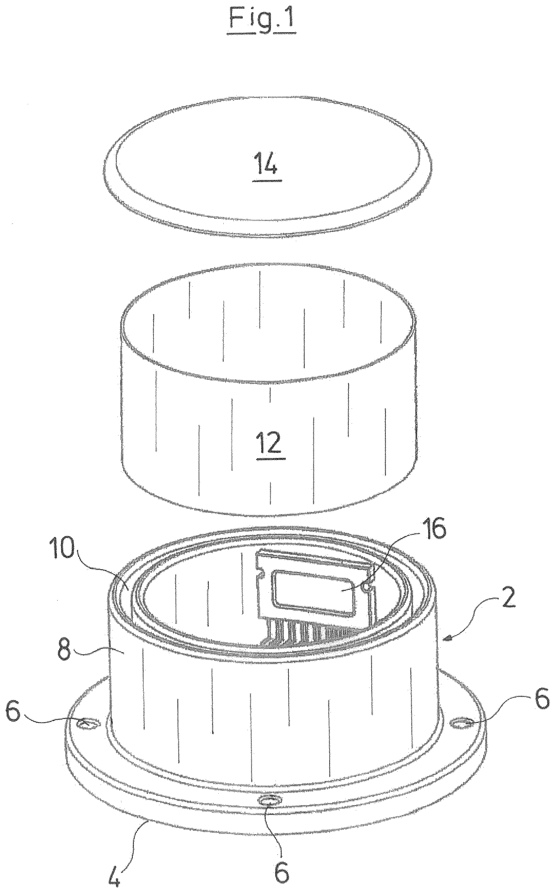

In Fig. 1 ist ein Statorgehäuse 2 eines elektrischen Motors dargestellt, der Teil eines Pumpenaggregats ist. Das Statorgehäuse 2 dient typischerweise zur Aufnahme eines Stators des elektrischen Motors. In Fig. 1 wie auch in den nachfolgend beschriebenen übrigen Zeichnungsfiguren ist aus Gründen einer besseren Übersicht, auf die Darstellung des Stators verzichtet worden. Die Form des Statorgehäuse 2 ist im Wesentlichen hohlzylindrisch, wobei an einem Ende des Statorgehäuses 2 ein Flansch 4 ausgebildet ist. Der Flansch 4 dient zur Befestigung des Statorgehäuses 2 an einem Pumpengehäuse. Hierzu sind an dem Flansch 4 gleichmäßig über dessen Umfang verteilt mehrere Bohrungen 6 ausgebildet, die zur Aufnahme nicht dargestellter Befestigungsschrauben dienen.

Eine Außenwandung 8 des Statorgehäuses 2 ist hohl ausgebildet. D.h., in der Außenwandung 8 ist eine über den gesamten Umfang verlaufende ringförmige Ausnehmung 10 ausgebildet, die sich in Längsrichtung der Außenwandung 8 erstreckt. Die Ausnehmung 10 dient zur Aufnahme eines Dochtes 12 einer Heatpipe, die somit teilweise von der Außenwandung 8 des Statorgehäuses 2 mit gebildet wird. Sobald der Docht 12 durch die stirnseitige Öffnung in die Ausnehmung 10 eingeführt ist und eine Flüssigkeit als Arbeitsmedium eingefüllt ist, wird die Ausnehmung 10 von einem Deckel 14 stirnseitig verschlossen, der das gesamte Statorgehäuse 2 an dem von dem Flansch 4 abgewandten Ende verschließt.

Der Docht 12 weist die Form eines Zylinderrings auf. Wie für den Docht einer Heatpipe typisch, besteht der Docht 12, wie im Übrigen auch alle anderen in den nachfolgend beschriebenen Zeichnungen dargestellten Dochte aus einem Kapillarmaterial. Die Formgebung des Dochts 12 wie auch die Formgebung der übrigen dargestellen Dochte kann z.B. derart erfolgen, dass durch Foliengießen zunächst eine Folie aus dem Kapillarmaterial geformt wird, die dann zur Bildung eines Zylinderrings um einen Zylinderkern gewickelt wird und anschließend durch Sintern verfestigt wird. Als weiteres Verfahren zur Formgebung des Dochts 12 kann auch das Metallpulverspritzgießen (MIM) verwendet werden, was insbesondere zur Realisierung komplexer Dochtgeometrien vorteilhaft ist.

Die von der Außenwandung 8 und dem darin angeordneten Docht 12 gebildete Heatpipe dient zur Wärmeabfuhr eines in dem Statorgehäuse 2 angeordneten Wärme erzeugenden Bauteils 16, beispielsweise einer Leistungselektronik oder eines Leistungsschalters. Dieses Bauteil 16 ist zweckmäßigerweise in unmittelbarer Nähe zu bzw. in Anlage mit der Innenseite der Außenwandung 8 angeordnet, um einen möglichst effektiven Wärmeübergang von dem Bauteil 16 zu der Heatpipe zu gewährleisten.

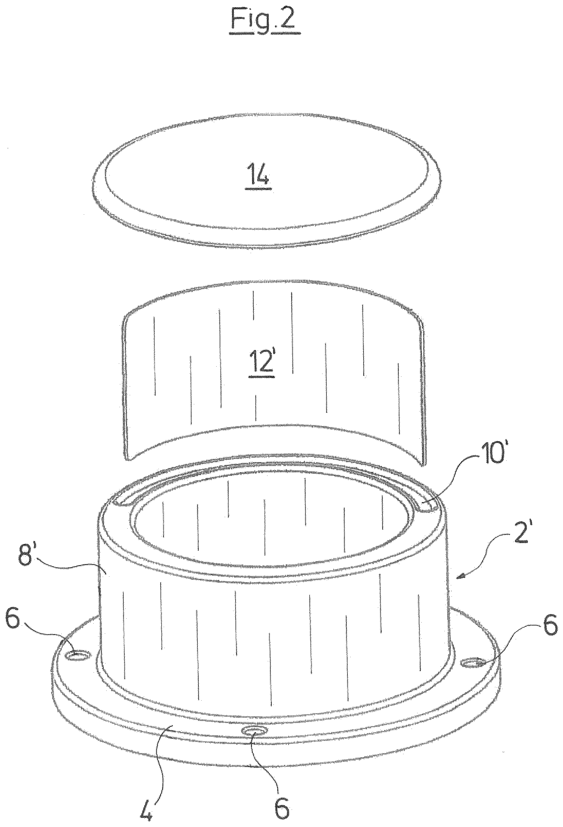

Das in Fig. 2 dargestellte Statorgehäuse 2' unterscheidet sich von dem in Fig. 1 dargestellten Statorgehäuse 2 lediglich hinsichtlich der Ausgestaltung der Heatpipe, d.h. der Ausgestaltung der in einer Außenwandung 8' des Statorgehäuses 2' ausgebildeten Ausnehmung 10' und des darin anzuordnenden Dochtes 12'. So erstreckt sich die Ausnehmung 10' lediglich über den halben Umfang der Außenwandung 8'. Korrespondierend hierzu hat ein zur Anordnung in der Ausnehmung 10' vorgesehener Docht 12' die Form eines sich über einen Winkel von 180° erstreckenden Zylinderringsegments.

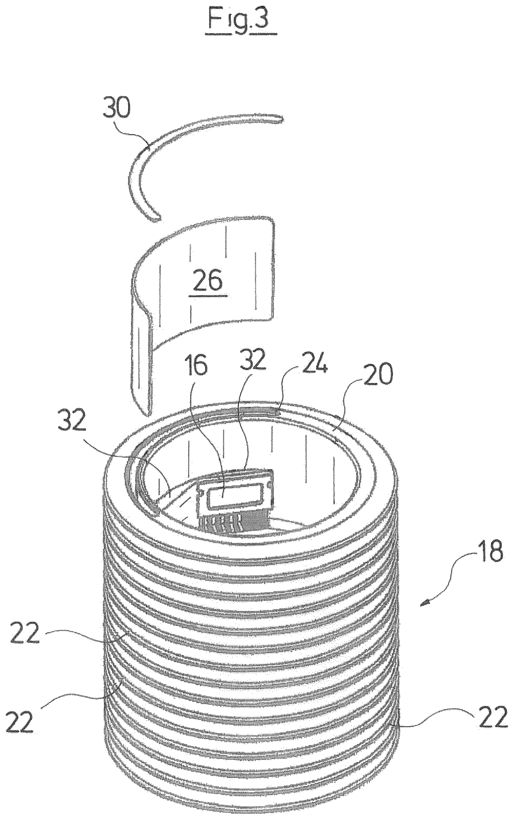

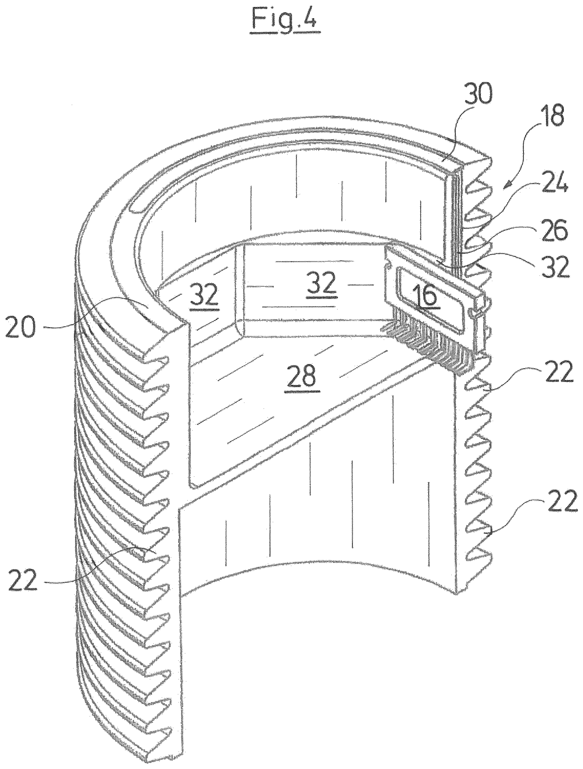

In den Fig. 3 und 4 ist ein Statorgehäuse 18 dargestellt, bei dem eine Außenwandung 20 des Statorgehäuses 18 an ihrer Außenseite mit einer Vielzahl von Kühlrippen 22 versehen ist. Auch die Außenwandung 20 des Statorgehäuses 18 bildet einen Teil einer Heatpipe. Zu diesem Zweck ist auch in der Außenwandung 20 eine Ausnehmung 24 ausgebildet, die zur Aufnahme eines Dochts 26 dient. Die Ausnehmung 24 erstreckt sich in Umfangsrichtung der Außenwandung 20 über einen Winkelbereich von etwa 180° und in Längsrichtung der Außenwandung 20 bis auf die Höhe einer Querwandung 28, die das Innenlumen des Statorgehäuses 18 in zwei voneinander getrennte Abschnitte teilt. Der Docht 26 weist eine mit der Umfangskontur der Ausnehmung 24 korrespondierende Wölbung auf und erstreckt sich in Richtung dieser Wölbung über einen Winkelbereich von ungefähr 180°. Um die Ausnehmung 24 mit dem darin angeordneten Docht 26 hermetisch verschließen zu können, ist ein Deckel 30 vorgesehen, dessen Kontur im Wesentlichen der Querschnittskontur der Ausnehmung 24 entspricht:

Auf Höhe der Ausnehmung 24 und direkt an die Querwandung 28 anschließend sind an der Innenseite des Statorgehäuses 18 Vorsprünge 32ausgebildet, die Flachseiten bilden, die die ansonsten kreisförmige Innenquerschnittskontur des Statorgehäuses 18 sekantenförmig schneiden. Zumindest eine der von den Vorsprüngen 32 gebildeten Flachseiten dient als Anlagefläche für ein Wärme erzeugendes Bauteil 16. Dessen Abwärme kann so in besonders effektiver Weise an die Heatpipe abgegeben werden und von dort über die Außenwandung 20 und die daran ausgebildeten Kühlrippen 22 an die Umgebung des Statorgehäuses 18 abgeführt werden.

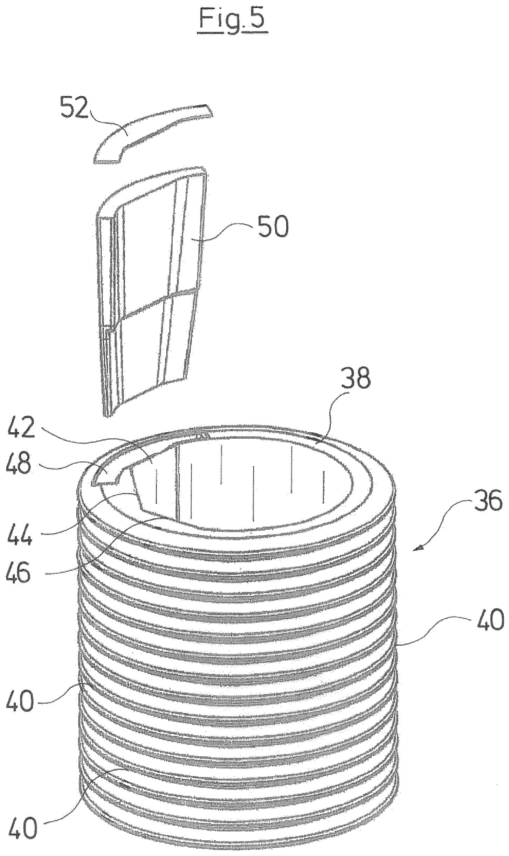

In Fig. 5 ist ein Statorgehäuse 36 dargestellt, an dessen Außenwandung 38 ebenfalls eine Vielzahl von über den gesamten Umfang der Außenwandung 38 verlaufender Kühlrippen 40 ausgebildet sind. Die Innenquerschnittskontur des Statorgehäuses 36 ist weitgehend kreisförmig rund ausgebildet, bildet dabei aber in einem Abschnitt drei aneinander angrenzende Flachseiten 42, 44 und 46. Im Bereich der Flachseite 42 ist in der Außenwandung 38 eine Ausnehmung 48 ausgebildet, die sich in Umfangsrichtung der Außenwandung 38 über die beiden Enden der Flachseite 42 hinaus erstreckt. Die Querschnittskontur der Ausnehmung 48 ist an ihrer Außenseite korrespondierend zur Außenkontur der Außenwandung 38 rund ausgebildet, während sie an ihrer Innenseite korrespondierend zur Flachseite 42 eben flach ausgebildet ist. Die Ausnehmung 48 dient zur Aufnahme eines Dochts 50, dessen Form im Wesentlichen der Form der Ausnehmung 48 entspricht. Zum hermetischen Verschließen der Ausnehmung 48 ist ein Deckel 52 vorgesehen, dessen Außenkontur im Wesentlichen der Außenkontur der Ausnehmung 48 entspricht.

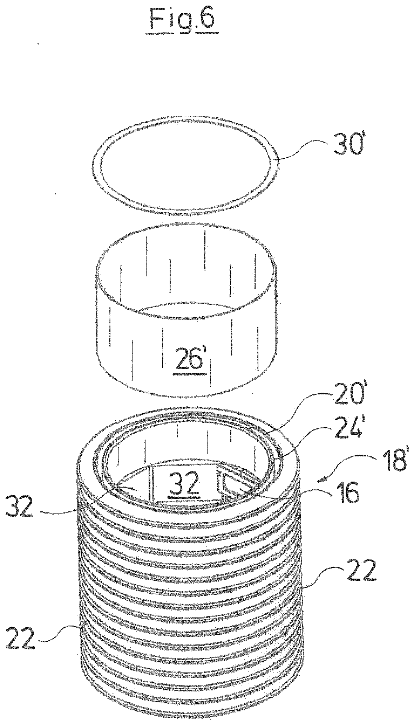

Das in Fig. 6 dargestellte Statorgehäuse 18' entspricht im Wesentlichen dem Statorgehäuse 18 in den Fig. 3 und 4. Das Statorgehäuse 18' unterscheidet sich von dem Statorgehäuse 18 dahingehend, dass in der Außenwandung 20' des Statorgehäuses 18' eine Ausnehmung 24 ausgebildet ist, die sich über den gesamten Umfang der Außenwandung 20' erstreckt. Korrespondieren hierzu sind ein zur Aufnahme in der Ausnehmung 24 vorgesehener Docht 26 in Form eines Zylinderrings ausgebildet und ein Deckel 30' zum Verschließen der Ausnehmung 24' ringförmig ausgebildet.

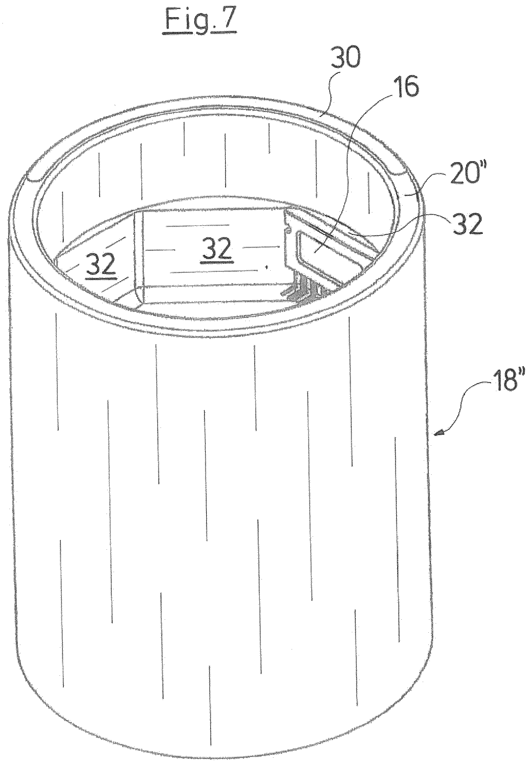

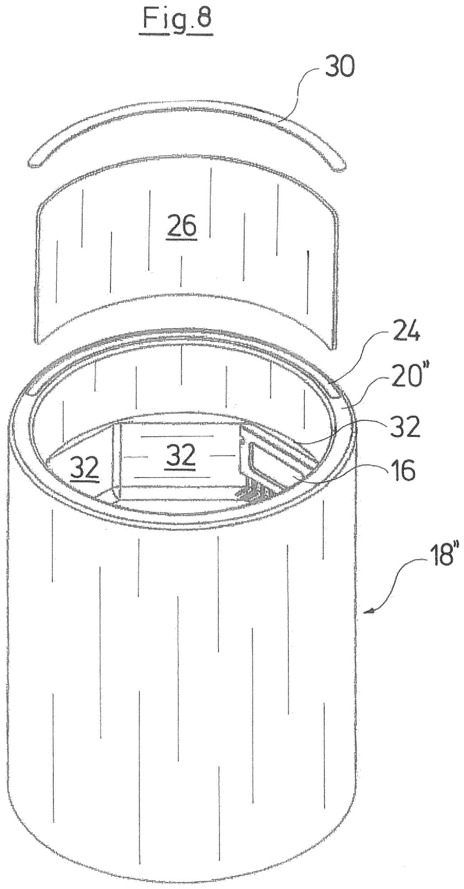

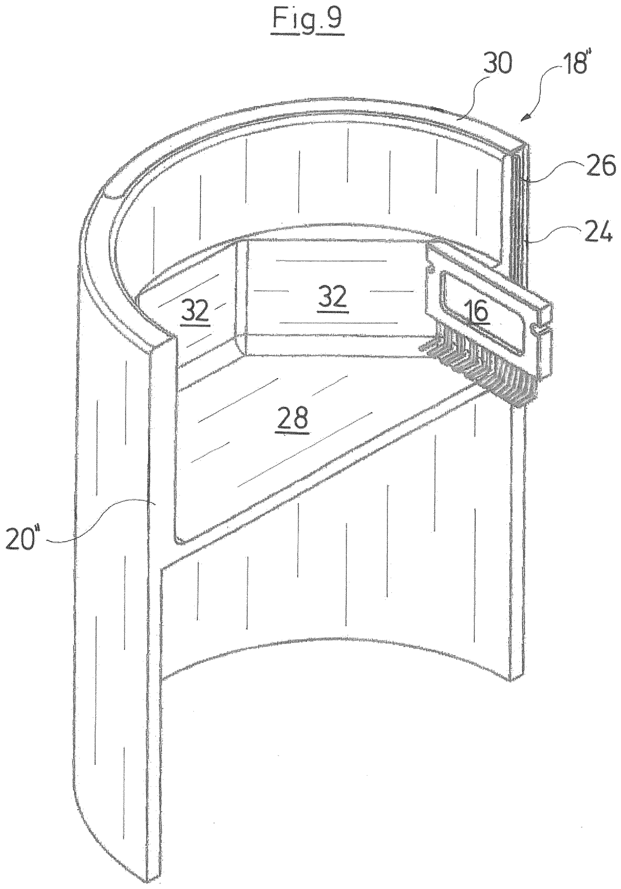

Auch das in den Fig. 7 bis 9 dargestellte Statorgehäuse 18" entspricht im Wesentlichen dem Statorgehäuse 18 in den Fig. 3 und 4. Es unterscheidet sich von dem Statorgehäuse 18 lediglich dahingehend, dass an der Außenseite der Außenwandung 20" des Statorgehäuses 18" keine Kühlrippen 22 ausgebildet sind.

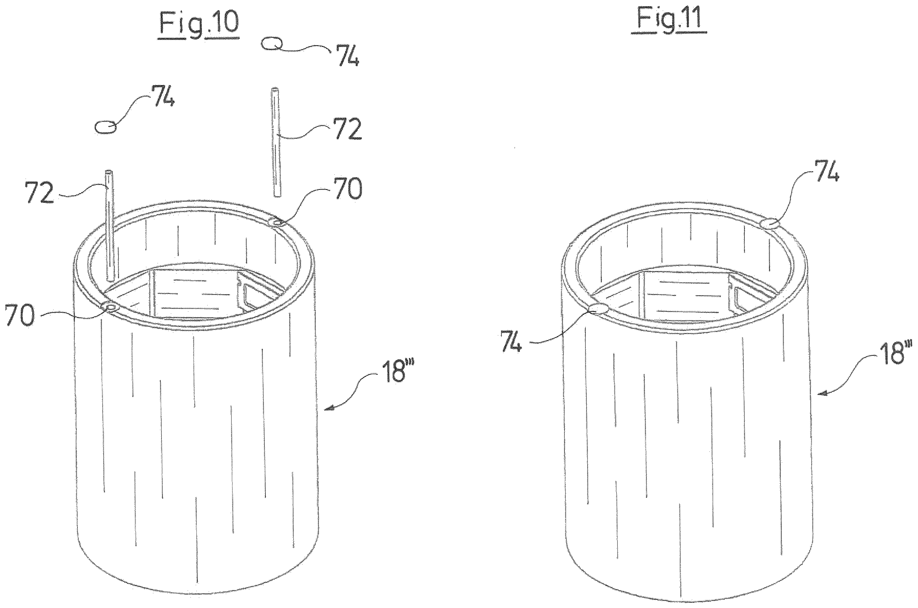

Das in den Fig. 10 und 11 dargestellte Statorgehäuse 18"' ähnelt dem in den Fig. 7 bis 9 dargestellten Statorgehäuse 18". An einer Außenwandung 20"' des Statorgehäuses 18"' sind einander diametral gegenüberliegend zwei in Längsrichtung der Außenwandung 20'" verlaufende Ausnehmungen 70 in Form von Bohrungen ausgebildet. In die Ausnehmungen 70 sind rohrförmige Dochte 72 eingesetzt. Das freie Innenlumen der Dochte 72 bildet den Raum für das zur Bildung von Heatpipes erforderliche Arbeitsfluid. Mit Deckeln 74 werden die Ausnehmungen 70 hermetisch verschlossen.

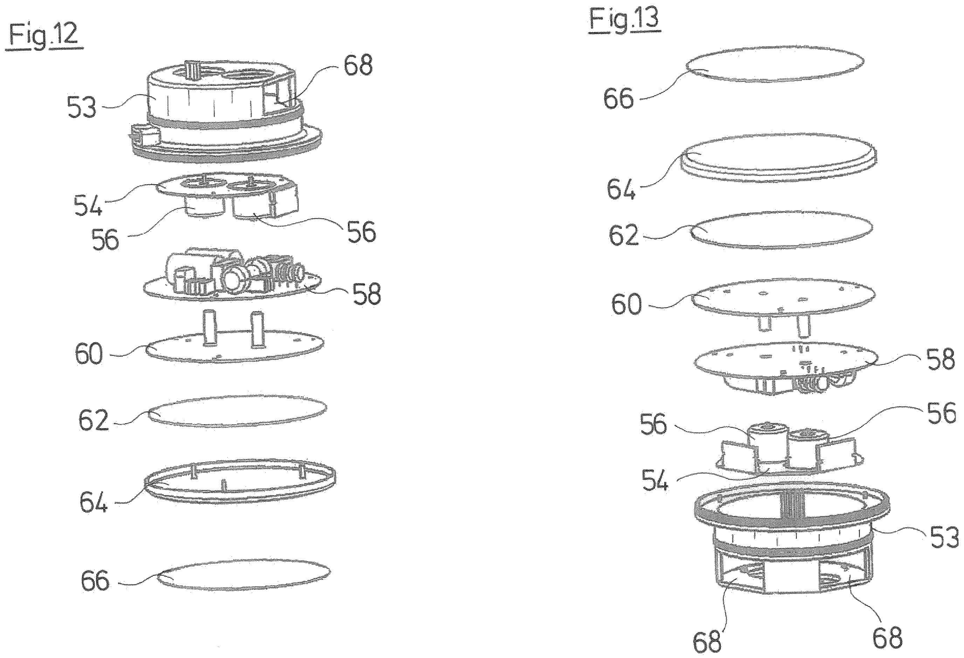

Die Fig. 12 und 13 zeigen ein Innengehäuse 53 mit diversen darin angeordneten elektronischen Komponenten. Das Innengehäuse 53 ist zum Einbau in ein Statorgehäuse eines elektrischen Motors vorgesehen und aus Kunststoff ausgebildet. Eine Stirnseite des Innengehäuses 53 ist geschlossen ausgebildet während eine zweite Stirnseite des Innengehäuses 53 offen ausgebildet ist.

In dem Innengehäuse 53 sind ausgehend von der geschlossen ausgebildeten Stirnseite eine erste Platine 54 mit darauf angeordneten Komponenten 56 der Leistungselektronik sowie eine Hauptplatine 58 eingebaut. Daran schließen sich in Richtung der offenen Stirnseite des Innengehäuses 53 eine Abdeckplatte 60, eine Display-Platine 62, eine Display-Abdeckung 64 und ein Display 66 an.

Die auf der Platine 54 angeordneten Komponenten 56 der Leistungselektronik erzeugen eine verhältnismäßig große Wärmemenge, die aus dem Statorgehäuse über zumindest eine dort ausgebildete Heatpipe abzuführen ist. Um die Komponenten 56 in einen direkten wärmeleitenden Kontakt mit der Heatpipe bzw. dem diese enthaltenden Gehäuse bringen zu können, sind an der Umfangsseite des Innengehäuses 53 korrespondierend zur Lage der Komponenten 56 Öffnungen 68 ausgebildet, durch welche die Komponenten 56 in wärmeleitende Verbindung mit dem die Heatpipe enthaltenden Gehäuse gebracht werden können.

### Bezugszeichenliste

- 2, 2': - Statorgehäuse
- 4: - Flansch
- 6: - Bohrung
- 8, 8': - Außenwandung
- 10, 10': - Ausnehmung
- 12, 12': - Docht
- 14: - Deckel
- 16: - Bauteil
- 18, 18', 18", 18"': - Statorgehäuse
- 20, 20', 20", 20"': - Außenwandung
- 22: - Kühlrippe
- 24, 24': - Ausnehmung
- 26, 26': - Docht
- 28: - Querwandung
- 30, 30': - Deckel
- 32: - Vorsprung
- 36: - Statorgehäuse
- 38: - Außenwandung
- 40: - Kühlrippe
- 42: - Flachseite
- 44: - Flachseite
- 46: - Flachseite
- 48: - Außnehmung
- 50: - Docht
- 52: - Deckel
- 53: - Innengehäuse
- 54: - Platine
- 56: - Komponente
- 58: - Hauptplatine
- 60: - Abdeckplatte
- 62: - Display-Platine
- 64: - Display-Abdeckung
- 66: - Display
- 68: - Öffnung
- 70: - Ausnehmung
- 72: - Docht
- 74: - Deckel

## Patentansprüche

1. Pumpenaggregat mit einem elektrischen Antriebsmotor mit einem Gehäuse (2; 18), welches ein Motorgehäuse mit einem Klemmenkasten ist, wobei der Klemmenkasten Teil des Motorgehäuses ist und zumindest einen Teil einer Leistungs- und Steuerelektronik sowie Bedienelemente des Motors beinhaltet, **dadurch gekennzeichnet, dass** in das Gehäuse zumindest eine Heatpipe (10; 24) zur Wärmeabfuhr integriert ist, wobei in einer Wandung des Gehäuses eine Ausnehmung (10, 10', 24, 24', 48, 70) ausgebildet ist, welche zumindest einen Teil der Heatpipe bildet, in der Ausnehmung (10, 10', 24, 24', 48, 70) ein Arbeitsfluid der Heatpipe aufgenommen ist, wobei zumindest ein Wärme erzeugendes Bauteil (16), welches eine Komponente einer Leistungselektronik ist, an der Außenseite der Heatpipe (10; 24) im Bereich eines Verdampferendes angeordnet ist.

2. Pumpenaggregat nach Anspruch 1, **dadurch gekennzeichnet, dass** das Gehäuse auch ein Pumpengehäuse integriert.

3. Pumpenaggregat nach einem der vorangehenden Ansprüche, **dadurch gekennzeichnet, dass** in der Ausnehmung (10, 10', 24, 24', 48, 70) ein Docht (12, 12', 26, 26', 50, 72) der Heatpipe aufgenommen ist.

4. Pumpenaggregat nach einem der vorangehenden Ansprüche**dadurch gekennzeichnet, dass** die zumindest eine an einer Wandung des Gehäuses ausgebildete Ausnehmung (10, 10', 24, 24', 48, 70) mit einem Deckel (14, 30, 30', 52, 74) hermetisch verschlossen ist.

5. Pumpenaggregat nach einem der vorangehenden Ansprüche, **dadurch gekennzeichnet, dass** zumindest ein Wärme erzeugendes Bauteil (16) an der Wandung des Gehäuses im Bereich der Ausnehmung (10, 10', 24, 24', 48, 70) anliegt.

6. Pumpenaggregat nach einem der vorangehenden Ansprüche, **dadurch gekennzeichnet, dass** mindestens ein zur Anlage des zumindest einen Wärme erzeugenden Bauteils vorgesehener Abschnitt an der Wandung des Gehäuses eben abgeflacht ausgebildet ist.

7. Pumpenaggregat nach einem der vorangehenden Ansprüche, **dadurch gekennzeichnet, dass** in einem in dem Gehäuse angeordneten Innengehäuse (53) das zumindest eine Wärme erzeugende Bauteil (16) angeordnet ist, wobei das Abwärme erzeugende Bauteil (16) eine Wandung des Gehäuses durch in dem Innengehäuse (53) ausgebildete Öffnungen (68) direkt oder Indirekt kontaktiert.

8. Pumpenaggregat nach einem der vorangehenden Ansprüche, **dadurch gekennzeichnet, dass** an der Außenseite des Gehäuses Kühlrippen (22, 40) ausgebildet sind.

9. Pumpenaggregat nach einem der vorangehenden Ansprüche, **dadurch gekennzeichnet, dass** die zumindest eine Heatpipe in eine Außenwandung (8, 8', 20, 20', 20", 38) des Gehäuses integriert ist.

10. Pumpenaggregat nach einem der vorangehenden Ansprüche, **dadurch gekennzeichnet, dass** sich die Heatpipe mit ihrer Längsachse parallel zur Drehachse des Motors erstreckt.

## Claims

1. A pump assembly with an electrical drive motor with a casing (2; 18) which is a motor casing with a terminal box, wherein the terminal box is part of the motor casing and contains at least a part of the power and control electronics as well as operating elements of the motor, **characterised in that** at least one heat pipe (10; 24) for heat dissipation is integrated into the casing, wherein a recess (10; 10', 24, 24', 48, 70) is formed in a wall of the casing, said recess forming at least a part of the heat pipe, in which recess (10; 10', 24, 24', 48, 70) an operating fluid of the heat pipe is received, wherein at least one component (16) which produces heat and which is a component of the power electronics is arranged on the outer side of the heat pipe (10; 24) in the region of an evaporator end.

2. A pump assembly according to claim 1, **characterised in that** the casing also integrates a pump casing.

3. A pump assembly according to one of the preceding claims, **characterised in that** a wick (12; 12', 26, 26', 50, 72) of the heat pipe is received in the recess (10; 10', 24, 24', 48, 70).

4. A pump assembly according to one of the preceding claims, **characterised in that** the at least one recess (10; 10', 24, 24', 48, 70) which is formed on a wall of the casing is hermetically closed by a cover (14, 30, 30', 52, 74).

5. A pump assembly according to one of the preceding claims, **characterised in that** at least one component (16) which produces heat bears on the wall of the casing in the region of the recess (10; 10', 24, 24', 48, 70).

6. A pump assembly according to one of the preceding claims, **characterised in that** at least one section which is envisaged for the contact of the at least one component which produces heat is designed flattened in a plane manner on the wall of the casing.

7. A pump assembly according to one of the preceding claims, **characterised in that** the at least one component (16) which produces heat is arranged in an inner casing (53) which is arranged in the casing, wherein the component (16) which produces the waste heat directly or indirectly contacts a wall of the casing through openings (68) which are formed in the inner casing (53).

8. A pump assembly according to one of the preceding claims, **characterised in that** cooling ribs (22, 40) are formed on the outer side of the casing.

9. A pump assembly according to one of the preceding claims, **characterised in that** the at least one heat pipe is integrated into an outer wall (8, 8', 20, 20', 20", 38) of the casing.

10. A pump assembly according to one of the preceding claims, **characterised in that** the heat pipe extends with its longitudinal axis parallel to the rotation axis of the motor.

## Revendications

1. Groupe motopompe avec un moteur d'entraînement électrique ayant un carter (2; 18) qui est un carter de moteur avec un boîtier de connexion, le boîtier de connexion étant une partie du carter de moteur et logeant au moins une partie d'une électronique de puissance et de commande ainsi que des organes de commande, **caractérisé en ce que**, pour la dissipation de chaleur, au moins un caloduc (10; 24) est intégré dans le carter, un évidement (10, 10', 24, 24', 48, 70) étant formé dans une paroi du carter, lequel forme au moins une partie du caloduc, un fluide de travail du caloduc étant reçu dans l'évidement (10, 10', 24, 24', 48, 70), un composant (16) engendrant de la chaleur, qui est un composant d'une électrique de puissance, étant disposé sur la face extérieure du caloduc (10; 24) dans la zone d'une extrémité d'évaporateur.

2. Groupe motopompe selon la revendication 1, **caractérisé en ce que** le carter intègre aussi un carter de pompe.

3. Groupe motopompe selon une des revendications précédentes, **caractérisé en ce qu'**une mèche (12, 12', 26, 26', 50, 72) du caloduc est reçu dans l'évidement (10, 10', 24, 24', 48, 70).

4. Groupe motopompe selon l'une des revendications précédentes, **caractérisé en ce qu'**au moins un évidement (10, 10', 24, 24', 48, 70) formé dans une paroi du carter, est fermé hermétiquement par un couvercle (14, 30, 30', 52, 74).

5. Groupe motopompe selon l'une des revendications précédentes, **caractérisé en ce qu'**au moins un composant (16) engendrant de la chaleur, est en appui sur la paroi du carter dans la zone de l'évidement (10, 10', 24, 24', 48, 70).

6. Groupe motopompe selon l'une des revendications précédentes, **caractérisé en ce qu'**au moins une partie sur la paroi du carter, prévue pour l'appui dudit au moins un composant engendrant de la chaleur, est formé plane et plat.

7. Groupe motopompe selon l'une des revendications précédentes, **caractérisé en ce que** ledit au moins un composant (16) engendrant de la chaleur est disposé dans un carter intérieur (53) disposé dans le carter, le composant (16) engendrant de la chaleur étant en contact direct ou indirect avec une paroi du carter par des ouvertures (68) formées dans le carter intérieur (53).

8. Groupe motopompe selon l'une des revendications précédentes, **caractérisé en ce que** des ailettes de refroidissement (22, 40) sont formées sur la face extérieure du carter.

9. Groupe motopompe selon l'une des revendications précédentes, **caractérisé en ce que** ledit au moins un caloduc est intégré dans une paroi extérieure (8, 8', 20, 20', 20", 38) du carter.

10. Groupe motopompe selon l'une des revendications précédentes, **caractérisé en ce que** le caloduc s'étend de par son axe longitudinal, parallèlement à l'axe de rotation du moteur.
